# EUROPEAN PATENT SPECIFICATION

(11) **EP 0 517 344 B1**
(45) Date of publication and mention of the grant of the patent: **14.04.1999**
(21) Application number: 92202453.4
(22) Date of filing: 28.06.1990
(51) Int. Cl.: G03H 1/02, G06K 9/76, G06E 3/00, G06E 1/04

(54) **Optical correlation apparatus**
Anordnung zur optischen Korrelation
Dispositif de corrélation optique

(30) Priority: 28.06.1989 JP 166254/89; 10.08.1989 JP 207483/89; 06.04.1990 JP 92882/90; 06.04.1990 JP 92883/90
(43) Date of publication of application: 09.12.1992
(62) Divisional of application: 90307083.7
(73) Proprietor: SEIKO INSTRUMENTS INC., Tokyo 136 (JP)
(72) Inventor: Iwaki, Tadao, c/o Seiko Instruments Inc., Tokyo (JP); Mitsuoka, Yasuyuki, c/o Seiko Instruments Inc., Tokyo (JP); Yamamoto, Shuhei, c/o Seiko Instruments Inc., Tokyo (JP)
(74) Representative: Sturt, Clifford Mark

(56) References cited:
- WO-A-87/00642
- US-A- 3 779 631
- US-A- 4 715 683
- US-A- 4 832 447
- SOVIET JOURNAL OF QUANTUM ELECTRONICS vol. 13, no. 6, June 1983, NEW YORK US pages 689 - 695 VASIL'EV ET AL. 'PROGRESS IN THE DEVELOPMENT AND APPLICATIONS OF OPTICALLY CONTROLLED LIQUID CRYSTAL SPATIAL LIGHT MODULATORS (REVIEW)'
- GEC JOURNAL OF RESEARCH (INCORPORATING MARCONI.REVIEW.) vol. 1, no. 2, 1983, GREAT BADDOW CHEMSFORD GB pages 127 - 135 LAYCOCK 'TWO-DIMENSIONAL OPTICAL IMAGE PROCESSING FOR PATTERN RECOGNITION'

## Description

The present invention relates to optical correlation apparatus, e.g. for applying optical correlation processing to a two-dimensional image obtained from an image sensor such as a CCD camera to effect automatic pattern recognition or measurement in the field of optical information processing and optical measurement. The present invention also relates to a method of driving a holographic application apparatus for applying optical correlation processing to a two-dimensional image obtained from an imaging device such as a CCD camera to effect automatic pattern recognition and measurement in the holographic application field of optical information processing and optical measurement, or for reconstruction from holographic image.

Much effort has been made in the past to produce a real-time hologram by using a light addressed liquid crystal light valve. The light addressed liquid crystal light valve mainly utilizes twist nematic liquid crystal (TN type liquid crystal). Further, the known light addressed liquid crystal light valve utilizes a photoconductive layer composed of bismuth silicate crystal (Bi₁₂SiO₂₀ crystal) to record a hologram in order to reduce the wave number pitch of hologram interference fringes and to improve recording density and contrast of the reconstructed image, thereby achieving a recording density of 50 - 60 ℓp/mm and a reconstructed image contrast 1:30, as disclosed in A.A. Vasil'ev et al., Sov. J. Quantum Electron. 14(2), Feb. 276 - 277 (1984).

However, the holographic apparatus utilizing the known light addressed liquid crystal light valve has a slow speed of recording and reproduction of about several hundreds msec and has insufficient contrast of the reconstructed image. Further, the known apparatus has a handling problem, such as the fact that the light addressed liquid crystal light valve has to be stored in a dark space while a voltage is applied thereto in order to maintain the hologram for a long time. Moreover, there is another problem in that an extremely large interferometer is needed due to the small angle between the reference light and the signal light.

Optical interconnection has been studied as a basically important technology in the field of optical information processing, optical communication and optical measurement. Optical information processing uses a key technology such as optical interconnection between 0EICs and interconnection between nurons in nural network. Such interconnection has been realized by using holograms formed by a silver salt photograph, a thermoplastic, or a non-linear optical crystal such as BaTi0₃ single crystal. In the field of optical communication and optical measurement, switching of the optical path and spectrometer are generally carried out with a mirror, a half mirror prism or a diffraction grating. Further, in the optical communication field, holography such as mentioned above in the optical information processing can be utilized for optical interchanging.

However, in the case of the known optical separating element such as a mirror, a half mirror prism and a diffraction grating, the light path is generally fixed, and selective switching of the light path is carried out by mechanical means, thereby causing problems such as low switching speed and difficult adjustment. A hologram using the silver salt photographic plate has a similar problem in that the switching of the light path is difficult. With regard to a hologram using a thermoplastics or a non-linear optical crystal such as BaTiO₃ single crystal, selective switching of the light path is possible, but the thermoplastics needs a great driving current and has a long response time of the order of several hundreds msec at least. The BaTiO₃ single crystal is operated in the temperature range of about 20° - 130°C, and therefore it cannot be used at a lower temperature range. Further, it has problems such as the fact that the size of the crystal is limited and the crystal is rather expensive.

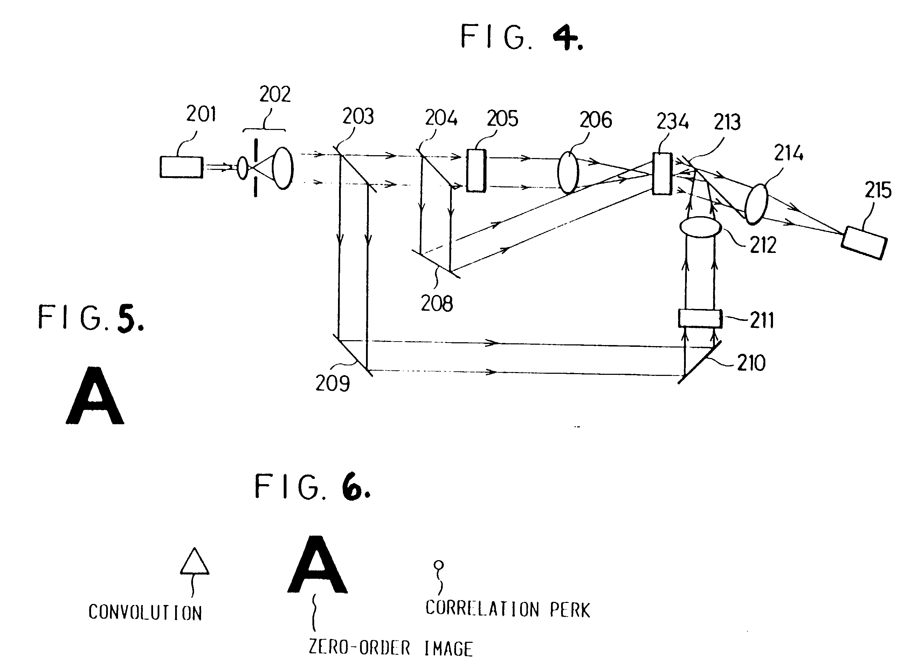

In the past, an optical correlator using a Fourier transform hologram (as a matched filter) features high S/N ratio, and hence it has been frequently used for the study of pattern recognition and for an optical computer. Generally, a photographic dry plate is utilized to produce a Fourier transform hologram in view of its high resolution and wide dynamic range. Namely, a Fourier hologram of the code or reference image is recorded and developed on the dry plate. However this method cannot rewrite code images in real-time. Figure 4 shows an optical correlator utilizing an optically writeable TN liquid crystal spatial modulator operable to effect pattern recognition in real time.

In Figure 4, the laser source 201 emits light which is expanded by a beam expander 202 and then divided into two beams by a beam splitter 203. One of the two beams passing through the beam splitter 203 is again divided by a beam splitter 204 into two beams. One of the two beams from the beam splitter 204 illuminates a code image on a code plate 205 to form a corresponding coherent code image. Thereafter, the coherent code image is Fourier transformed by the first Fourier transform lens 206, and thereafter irradiates a writing face of a light addressed TN liquid crystal light valve 234 to thereby form a Fourier code image. On the other hand, the other beam reflected by the beam splitter 204 is again reflected by a first mirror 208 to thereafter irradiate the writing face of the TN liquid crystal light valve 234 in the form of a reference beam to interfere with the Fourier code image to form interference fringes. The interference fringes are then recorded on the TN liquid crystal light valve 234 in the form of a Fourier code hologram having a grey scale. Further, the other beam reflected by the beam splitter 203 is sequentially reflected by a second mirror 209 and a third mirror 210, and irradiates an input image on an input plate 211 to convert the input image into a corresponding coherent input image. The coherent input image is Fourier transformed by a second Fourier transform lens 212 and then is directed onto a polarizing beam splitter 213 so as to irradiate a reading face of the TN liquid crystal light valve 234 to form the Fourier input image. Consequently, a Fourier code hologram is read from the light addressed TN liquid crystal light valve 234. The read image is then Fourier transformed by a third Fourier transform lens 214 to form a correlation image which contains a correlation function and a convolution function between the code image and the input image and zero-order light. The intensity of the correlation function is detected by a photodetector 215 so as to effect recognition.

In such a construction, the code plate 205 is placed in the front focal plane of the first Fourier transform lens 206. The light addressed TN liquid crystal light valve 234 is placed in the back focal plane of the first Fourier transform lens 206, in the back focal plane of the second Fourier transform lens 212, and in the front focal plane of the third Fourier transform lens 214. The input plate 211 is placed in the front focal plane of the second Fourier transform lens 212. The photodetector 215 is placed in the back focal plane of the third Fourier transform lens 214.

In the Figure 4 structure, the light addressed TN liquid crystal light valve 234 can be replaced by a bismuth silicate (Bi₁₂SiO₂₀) crystal or a lithium niobate (LiNbO₃) crystal which constitutes a light addressed spatial light modulator operative according to the pockels effect of an electro-optic crystal or according to the photoconducting effect. Further, in place of the light addressed spatial light modulator, an imaging device such as a CCD camera is utilized to convert the Fourier code hologram into a corresponding electrical signal, which is then displayed on a liquid crystal television or a magneto-optic spatial light modulator, as disclosed, for example, in K.H. Liu, J.A. Davis and R.A. Lilly, Optics Letters, 27, 1988 and in D.L. Flannery, J.S. Loomis and M.E. Milkovich, Applied Optics 27, 1988.

However, in the case of the known optical correlator utilizing a light addressed spatial light modulator as a matched filter of a Fourier code hologram, the light addressed spatial light modulator has relatively low resolution. Further, although the image can be recorded on the gray scale, the dynamic range is rather narrow so that a complicated Fourier hologram cannot be recorded and the S/N ratio is bad in the pattern recognition. The speed of the pattern recognition is of the order of several hundreds msec for rewriting the Fourier code holograms, which is not sufficient in practice.

In another known optical correlator utilizing an electrically addressed spatial light modulator as a matched filter of a Fourier code hologram, the Fourier code hologram can be binarized to improve the S/N ratio and the rewriting speed of the Fourier code holograms is of the order of several ten msecs to achieve fast operation. However, the resolution is relatively low, i.e. of the order of several ℓp/mm, such that complicated image recognition cannot be effected.

A hologram recording medium is known which comprises a light addressed TN liquid crystal light valve in a holographic application apparatus such as an optical correlator utilizing a Fourier hologram as a matched filter, and a holographic device for reconstructing an holographic input image. However, the known light addressed TN liquid crystal light valve has relatively low resolution. Further, although the image can be recorded on the gray scale, the dynamic range is rather narrow so that complicated Fourier hologram cannot be recorded and the S/N ratio is bad in the pattern recognition. The speed of the pattern recognition is of the order of several hundred msecs for rewriting of the Fourier code holograms, which is not sufficient in practice.

According to the present invention, there is provided an optical correlation apparatus comprising:
means for converting at least one code image and at least one input image into a corresponding coherent code image and coherent input image;
means for Fourier transforming the coherent code image and the coherent input image into a Fourier code image and a Fourier input image independently of each other;
means for enabling coherent reference light of spherical wave or plane wave to interfere with the light beams modulated with the code image to form a Fourier input code hologram;
means for converting the Fourier code hologram into a binarized intensity distribution hologram image and for recording or displaying the same;
means for reading the binarized intensity distribution hologram by using light beams modulated with the Fourier input image; and
means for Fourier transforming the read binarized intensity hologram into a correlation image and for converting the correlation image into a corresponding output signal, characterised in that the means for converting the Fourier code hologram is a bistable spatial light modulator comprising a light addressed liquid crystal light valve having a hydrogenated amorphous silicon photoconductive layer, an optical reflection layer, a pair of liquid crystal alignment layers, a ferroelectric liquid crystal layer having a bistable memory characteristic of its reflectivity in response to an applied voltage, voltage application means for applying the voltage, and a pair of transparent substrates.

The apparatus may comprise first converting means for converting at least one code or reference image into a corresponding coherent code image; and second converting means for converting an input or signal image into a corresponding coherent input image.

Preferably, the apparatus comprises means for reading the binarized intensity distribution hologram recorded on the light valve by using a reading light from the Fourier input image.

A method of driving the optical correlation apparatus described above is characterised in that while continuously irradiating the light addressed ferroelectric liquid crystal light valve by writing light which forms Fourier holographic fringes thereon and by the reading light which forms the Fourier input image, the voltage application means is operated to continuously apply to the light addressed ferroelectric liquid crystal light valve a pulse voltage such that voltage polarity relative to the hydrogenated amorphous silicon photoconductive layer sequentially and cyclicly changes positive, negative and zero, erasing of the image is carried out during the time that the positive voltage is applied, writing of the image is carried out during the time that the negative voltage is applied, reading of the image is carried out during the time that the negative voltage or zero voltage is applied, and the pulse voltage is controlled to adjust its amplitude, frequency and pulse width during the periods in which the positive, negative and zero voltages are applied so as to regulate the intensity of the correlation image.

In the preferred form of the present invention, a matched filter is formed of a Fourier transformed hologram of a code image by using coherent reference light and the matched filter is read by a Fourier transformed input image, the result of which is again Fourier transformed to produce a correlation image between the code image and input image. The Fourier transform hologram is recorded in the matched filter in the binary form to thereby produce a correlation image output having a very high S/N ratio. In particular, the matched filter can be comprised of a rewriteable binary spatial light modulator such as a light addressed spatial light modulator utilizing optical modulating material composed of ferroelectric liquid crystal having a bistable memory characteristic of reflectivity in response to an applied voltage, thereby enabling fast and accurate pattern recognition.

By means of the construction described above, the Fourier hologram of the code image can be recorded on the binary spatial light modulator in the form of the optically binarized intensity distribution image. Therefore, the recorded hologram interference fringes are made sharp so as to produce a clearer correlation function and thereby improve S/N ratio of pattern recognition.

The light addressed liquid crystal light valve is such that without additional image processing, the Fourier hologram irradiated and formed on the binary recording device can be automatically binarized and recorded in the form of a binarized intensity distribution. Further, the ferroelectric liquid crystal molecules have a dipole moment which can be reversed in response to an external electric field so as to record and erase the hologram to enable fast recording and reproduction of the hologram in µsec order to thereby achieve extremely fast pattern recognition.

When a reading light is irradiated onto a reading face of the light addressed ferroelectric liquid crystal light valve utilized in the holographic application, the incident reading light partially reaches the hydrogenated amorphous silicon photoconductive layer through a dielectric mirror as a reflective layer in the light valve and is absorbed in the surface region of the photoconductive layer at a depth of about 1µm because the dielectric mirror has an optical transmittance sufficient to enable the incident reading light to act on the photoconductive layer. The absorption induces pairs of electrons and holes such that the electrons move to positive electrodes and the holes move to negative electrodes. Since the mobility of electrons is generally several times to several tens of times as great as that of the holes in an intrinsic or undoped hydrogenated amorphous silicon, the electrons are dominant in the electrical conductance.

Consequently, in the state where an erasing light in the form of the reading light is being irradiated, when a transparent electrode formed between the transparent substrate and the hydrogenated amorphous silicon photoconductive layer in opposed relation to the dielectric mirror is held at a positive voltage, the induced electrons are drawn to the positive voltage side across the photoconductive layer such that the impedance is abruptly reduced so as to reverse the ferroelectric liquid crystal molecules to thereby switch to a dark or erased state. On the other hand, if the said transparent electrode is held at a negative voltage, the movable carriers are holes and the holes cannot be effectively moved due to their low mobility, so that the photoconductive layer substantially never reduces its impedance. Consequently, the ferroelectric liquid crystal molecules would not switch to the opposite bistable state, and therefore the erasing cannot be effected.

When a writing light is irradiated onto a writing face of the light valve which is opposite to the reading face while that electrode is held at the negative voltage, pairs of electrons and holes are induced in a surface region of the photoconductive layer on the writing side such that electron carriers are moved toward the liquid crystal layer across the photoconductive layer so as to locally reduce impedance thereof at a portion selectively irradiated with the writing light. Consequently, a sufficient voltage is applied to the liquid crystal molecules to switch to a bright or writing state opposite to the dark or erasing state, thereby writing an image.

Consequently, according to the driving method described above, since the dielectric mirror provided in the light addressed ferroelectric liquid crystal light valve has an optical transmittance sufficient to enable the reading light to affect the hydrogenated amorphous silicon photoconductive layer, when the hydrogenated amorphous silicon photoconductive layer is held at the positive voltage, the image recorded on the light valve can be erased by the irradiation of erasing light from the reading side so as to reset or initialize the light valve. On the other hand, when the photoconductive layer is held at the negative voltage, a holographic image can be written in the light valve by the irradiation of writing light from the writing side.

The invention is illustrated, merely by way of example, in the accompanying drawings, in which:-
Figure 1 is a schematic diagram showing an embodiment of the binary optical correlator of the present invention;
Figure 2 is a schematic diagram showing a modification of the embodiment of Figure 1 utilizing a Mach-Zehnder type interferometer;
Figure 3 is a schematic diagram showing another modification of the embodiment of Figure 1 utilizing a Michelson type interferometer;
Figure 4 is a schematic diagram showing a known optical correlator;
Figure 5 is a diagram showing an example of an input image and a code image;
Figure 6 is a diagram showing a correlation peak image;
Figure 7 is a schematic diagram showing an holographic binary optical correlator driven according to the method of the present invention;
Figure 8 is a diagram showing optical response characteristics of a light addressed ferroelectric liquid crystal light valve driven according to the method of the present invention;
Figure 9 is a schematic diagram showing a Fourier transform type holographic apparatus driven according to the method of the present invention;
Figure 10 is a schematic diagram showing an holographic apparatus which may be driven by the driving method of the present invention;
Figure 11 is a graph showing the relationship between the voltage pulse width and the voltage amplitude at which the correlation peak intensity becomes a maximum in an holographic binary optical correlator driven according to the method of the present invention;
Figure 12 is a graph showing the relationship between the pulse voltage frequency and the correlation peak intensity in an holographic binary optical correlator driven according to the method of the present invention;
Figure 13 is a sectional view showing the construction of a light addressed ferroelectric liquid crystal light valve utilized in holographic application and driven according to the method of the present invention;
Figure 14 is an exploded view of a liquid crystal spatial light modulator which may be used in various forms for the apparatus of the present invention.

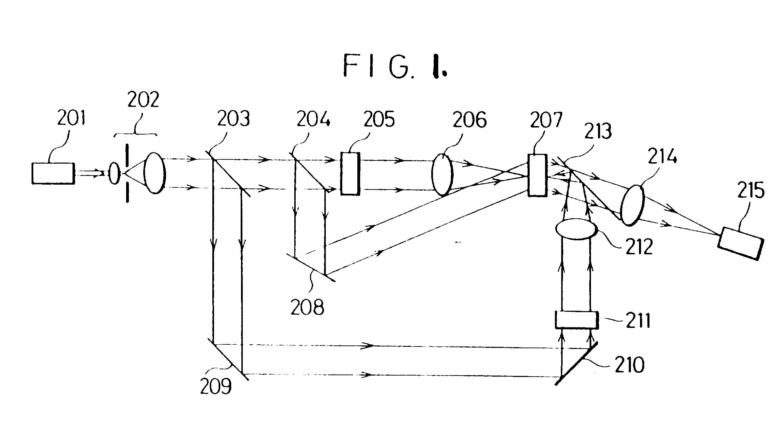

Figure 1 is a schematic diagram showing a binary optical correlator according to the present invention. As shown in Figure 1, a laser source 201, a beam expander 202, a first beam splitter 203, a second beam splitter 204 and a code plate 205 together constitute means for converting at least one code or reference image including a given object or a matching image into a corresponding coherent code image. The laser source 201, the beam expander 202, the first beam splitter 203, a second mirror 209, a third mirror 210 and an input plate 211 collectively constitute means for converting an input or signal image into a corresponding coherent input image. A first Fourier transform lens 206 and a second Fourier transform lens 212 placed separately from each other constitute means for Fourier transforming the coherent code image and the coherent input image independently of each other into a corresponding Fourier code image and a Fourier input image.

The second beam splitter 204 and a first mirror 208 constitute means for enabling coherent light of spherical wave or plane wave to interfere with the Fourier code image to form a Fourier code hologram. A light addressed binary spatial modulator 207 constitutes means for converting and binarizing the Fourier code hologram into a binarized intensity distribution image and for recording or displaying the same. The second Fourier transform lens 212 and a polarizing beam splitter 213 constitute means for reading the binarized intensity distribution image recorded on the binary spatial light modulator 207 by using the Fourier input image. A third Fourier transform lens 214 and a photodetector 215 constitute means for Fourier transforming the read intensity distribution image into a correlation image and for converting the correlation image into a corresponding electrical output signal. The binary spatial light modulator 207 comprises a light addressed liquid crystal light valve composed of a photoconductive layer, an optical reflection layer, a pair of liquid crystal alignment layers, a ferroelectric liquid crystal layer having bistable memory characteristic between the of this reflectivity and the applied voltage, means for applying the voltage and a pair of transparent substrates.

The laser source 201 emits coherent light which is expanded by the beam expander 202 and then divided into two beams by the first beam splitter 203. One of the two beams from the first beam splitter 203 is again divided by the second beam splitter 204 into two beams. One of the two beams from the second beam splitter 204 illuminates a code image on the code plate 205 to form a corresponding coherent code image. Thereafter, the coherent code image is Fourier transformed by the first Fourier transform lens 206, and thereafter irradiates a writing face of the light addressed binary spatial light modulator 207 to thereby form a Fourier code image. On the other hand, the other beam reflected by the second beam splitter 204 is again reflected by the first mirror 208 to thereafter irradiate the writing face of the binary spatial light modulator 207 in the form of a reference beam to interfere with the Fourier code image so as to form interference fringes. The interference fringes are binarized by a given threshold level and are then recorded on the binary spatial light modulator 207 in the form of a binarized Fourier code hologram. Further, the other beam reflected by the first beam splitter 203 is sequentially reflected by the second mirror 209 and a third mirror 210 to convert an input image. This coherent input image is Fourier transformed by the second Fourier transform lens 212 and then irradiates a reading face of the modulator 207 through the polarizing beam splitter 213 to form the Fourier input image. Consequently, the binarized Fourier code hologram is read from the light addressed spatial light modulator 207. The read image is passed through the polarizing beam splitter 213 and is then Fourier transformed by the third Fourier transform lens 214 to form a correlation image which contains a correlation function and a convolution function between the code image and the input image. The produced intensity of the correlation function is detected by the photodetector 215.

In such a construction, the code plate 205 is placed in the front focal plane of the first Fourier transform lens 206. The light addressed binary light spatial modulator 207 is placed in the back focal plane of the first Fourier transform lens 206, in the back focal plane of the second Fourier transform lens 212, and in the front focal plane of the third Fourier transform lens 214. The input plate 211 is placed in the front focal plate of the second Fourier transform lens 212. The photodetector 215 is placed in the back focal plane of the third Fourier transform lens 214.

The pattern recognition is carried out according to intensity of the correlation function at a correlation peak where the correlation function intensity becomes a maximum. Namely, the greater the correlation peak intensity becomes, the more the input image resembles the code or reference image. Figure 5 shows an example of code and input images for use in a binary optical correlator according to the present invention. Figure 6 shows a correlation image containing a correlation peak when using the code and input images shown in Figure 5. As shown, the correlation image contains a central zero-order image which is a mirror image of the input or code image, and a pair of peaks, comprising a correlation peak between the input and code images and a convolution peak, at the opposite sides of the zero-order image. The correlation peak and the convolution peak are aligned along a line perpendicular to the wave number vector of the interference fringes of the Fourier hologram. The distance from the zero-order image increases when the wave number of interference fringes of the Fourier hologram increases. The photodetector 215 is arranged to detect the correlation peak only.

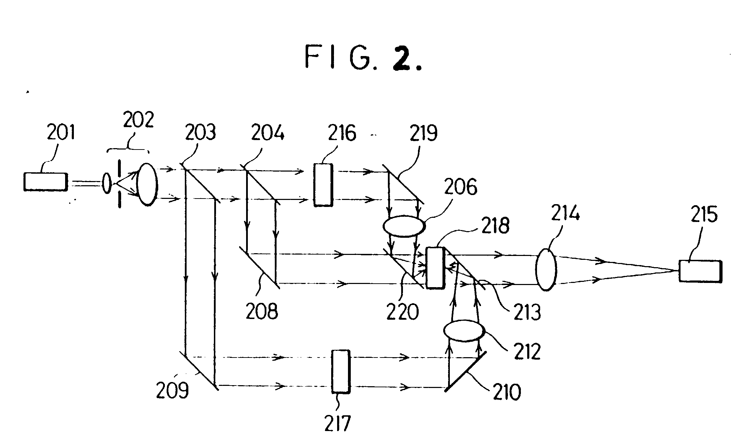

The binary optical correlator according to the present invention can be constituted by a Mach-Zehnder interferometer. Figure 2 is a schematic diagram showing such a modification of the binary optical correlator according to the present invention utilizing a Mach-Zehnder interferometer. As shown in Figure 2, a laser source 201, a beam expander 202, a first beam splitter 203, a second beam splitter 204 and a first liquid crystal television 216 together constitute means for converting at least one code or reference image including a given object or matching image into a corresponding coherent code image. The laser source 201, the beam expander 202, the first beam splitter 203, a second mirror 209, a second liquid crystal television 217 and a third mirror 210 and collectively constitute means for converting an input or signal image into a corresponding coherent input image. A first Fourier transform lens 206 and a second Fourier transform lens 212 placed separately from each other constitute means for Fourier transforming the coherent code image and the coherent input image independently of each other into corresponding Fourier code image and Fourier input image.

The second beam splitter 204, a first mirror 208 and a third beam splitter 220 constitute means for enabling coherent light of spherical wave or plane wave to interfere with the Fourier code image to form a Fourier code hologram. A light addressed ferroelectric liquid crystal light valve 218 or binary spatial light modulator constitutes means for converting and binarizing the Fourier code hologram into a binarized intensity distribution hologram and for recording or displaying the same. The second Fourier transform lens 212 and a polarizing beam splitter 213 constitute means for reading the binarized intensity distribution hologram recorded on the binary spatial modulator by using the Fourier input image. A third Fourier transform lens 214 and a photodetector 215 constitute means for Fourier transforming the read intensity distribution hologram into a correlation image and for converting the correlation image into a corresponding electrical output signal. The Figure 2 embodiment operates in a manner similar to the Figure 1 embodiment.

In the Figure 2 construction, the first liquid crystal television 216 is placed in the front focal plane of the first Fourier transform lens 206. The light addressed ferroelectric liquid crystal light valve 218 is placed in the back focal plane of the first Fourier transform lens 206, in the back focal plane of the second Fourier transform lens 212, and in the front focal plane of the third Fourier transform lens 214. The second liquid crystal television 217 is placed in the front focal plane of the second Fourier transform lens 212. The photodetector 215 is placed in the back focal plane of the third Fourier transform lens 214.

In the binary optical correlator utilizing the Mach-Zehnder interferometer according to the present invention, the optical path length can be shortened to form the Fourier hologram of the code image. Therefore, the overall dimensions of the interferometer can be reduced to thereby provide a sufficient space for accommodating means for entering an image such as the code plate 205 and the first liquid crystal television 216 compactly, thereby providing a practical advantage.

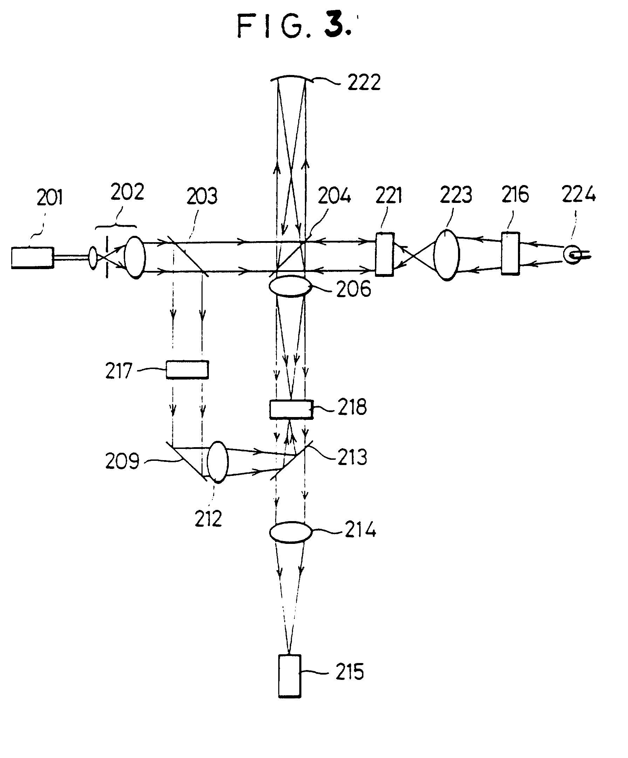

Figure 3 is a schematic diagram showing an embodiment of a binary optical correlator according to the present invention utilizing a Michelson interferometer. As shown in Figure 3, a laser source 201, a beam expander 202, a first beam splitter 203, a second beam splitter 204, a light addressed liquid crystal light valve 221,a white light source 224, a first liquid crystal television 216 and a imaging lens 223 together constitute means for converting at least one code or reference image including a given object or matching image into a corresponding coherent code image. The laser source 201, the beam expander 202, the first beam splitter 203, a second liquid crystal television 217 and a second mirror 209 collectively constitute means for converting an input or signal image into a corresponding coherent input image. A first Fourier transform lens 206 and a second Fourier transform lens 212 placed separately from each other constitute means for Fourier transforming the coherent code image and the coherent input image independently of each other into a corresponding Fourier code image and a Fourier input image.

The second beam splitter 204, a concave mirror 222 and the first Fourier transform lens 206 constitute means for enabling coherent light of spherical wave or plane wave to interfere with the Fourier code image to form a Fourier code hologram. A light addressed binary spatial modulator 218 in the form of ferroelectric liquid crystal light valve constitutes means for converting and binarizing the Fourier code hologram into a binarized intensity distribution hologram and for recording or displaying the same. The second Fourier transform lens 212 and a polarizing beam splitter 213 constitute means for reading the binarized intensity distribution hologram recorded on the binary spatial light modulator by using the Fourier input image. A third Fourier transform lens 214 and a photodetector 215 constitute means for Fourier transforming the read intensity distribution hologram into a correlation image and for converting the correlation image into a corresponding electrical output signal. A binary spatial light modulator in the form of a light addressed liquid crystal light valve 218 is composed of a photoconductive layer, an optical reflection layer, a pair of liquid crystal alignment layers,a ferroelectric liquid crystal layer having a bistable memory characteristic between its reflectivity and an applied voltage, means for applying the voltage, and a pair of transparent substrates.

Further, the light addressed liquid crystal light valve 221 is composed of a photoconductive layer, an optical reflection layer, a pair of liquid crystal alignment layer, a ferroelectric liquid crystal layer having a bistable memory characteristic between its reflectivity and an applied voltage, means for applying the voltage, and a pair of transparent substrates.

The laser source 201 emits coherent light which is expanded by the beam expander 202 and then divided into two beams by the first beam splitter 203. One of the two beams from the first beam splitter 203 is again divided by the second beam splitter 204 into two beams. On the other hand, the white light source 224 illuminates a code image displayed on the first liquid crystal television 216 to form a non-coherent code image. Thereafter, the non-coherent code image irradiates a writing face of the liquid crystal light valve 221 through the imaging lens 223 and the code image is displayed thereon. A light beam from the second beam splitter 204 converts the code image displayed on the light valve 221 into a corresponding coherent code image. Thereafter, the coherent code image is Fourier transformed by the first Fourier transform lens 206, and then irradiates a writing face of the light addressed ferroelectric liquid crystal light valve 218 to thereby form a Fourier code image. On the other hand, the other beam reflected by the second beam splitter 204 is again reflected by the concave mirror 222 and converted into a parallel beam by the first Fourier transform lens 206 to thereafter irradiate the writing face of the light valve 218 in the form of a reference beam to interfere with the Fourier code image to form interference fringes. The interference fringes are binarized by a given threshold level and are then recorded on the binary spatial light modulator 218 in the form of a binarized Fourier code hologram. Further, the other beam reflected by the first beam splitter 203 is passed through the second liquid crystal television 217 to convert an input image on the television 217 into a corresponding coherent input image. The coherent input image is reflected by the second mirror 209, is Fourier transformed by the second Fourier transform lens 212, and then irradiates a reading face of the light valve 218 through the polarizing beam splitter 213 to form the Fourier input image. Consequently, the binarized Fourier code hologram is read from the light addressed light valve 218. The read image is passed through the polarizing beam splitter 213 and is then Fourier transformed by the third Fourier transform lens 214 to form the correlation image which contains a correlation function and a convolution function between the code image and the input image. The intensity of the correlation function is detected by the photodetector 215.

In such a construction, the light valve 221 is placed in the front focal plane of the first Fourier transform lens 206. The light addressed ferroelectric liquid crystal light valve 218 is placed in the back focal plane of the first Fourier transform lens 206, in the back focal plane of the second Fourier transform lens 212, and in the front focal plane of the third Fourier transform lens 214. The second liquid crystal television 217 is placed in the front focal plane of the second Fourier transform lens 212. The photodetector 215 is placed in the back focal plane of the third Fourier transform lens 214.

In this embodiment, the concave mirror 222 and the first Fourier transform lens 206 have the same focal length, and the focal plane of the concave mirror 222 coincides with the front focal plane of the first Fourier transform lens 206. The binary optical correlator of Figure 3 can utilize a device such as electronic parts which are disposed so as to replace the first liquid crystal television 216. Such a device may be directly illuminated with white light to directly input its reflected light or projected light to thereby constitute quite a compact optical correlator. Moreover, means for entering the code image can be composed of a light emission type display, such as a CRT and a plasma display, or a reflection type liquid crystal display having a backlight source, instead of the first liquid crystal television 216.

When operating the binary correlators in Figures 2 or 3 to carry out pattern recognition or comparison of the code and input images with each other shown in Figure 5, the obtained correlation peak intensity is 1.2 times as great as that obtained when the known optical correlator in Figure 4 using the light addressed TN liquid crystal light valve is operated for the same pattern recognition, and the noise level is reduced to 1/10 that of the known optical correlator. Further, the correlation peak width is reduced to about 1/3 as compared to the prior art, whereby to achieve accurate pattern recognition. Moreover, the operation time can be reduced to 200 - 800µsec in a cycle of pattern recognition to thereby achieve quite fast pattern recognition as compared to the prior art.

In the embodiments of the present invention described above, the laser beam from the laser source 201 is divided by the first beam splitter 203 into two paths in order to produce the coherent code and input images independently of each other. Alternatively, however, a pair of laser sources can be used instead of a single laser source. Moreover, in the embodiments of the present invention described above, a single code image and a single input image are processed as shown in Figure 5. However, a plurality of code images and a single input image can be processed concurrently, or a single code image and a plurality of input images can be processed concurrently, or a plurality of code images and a plurality of input images can be processed or compared at once. In the embodiments of the present invention described above, the laser source 201 can be a gas laser, a semiconductor laser or a solid laser having good coherency.

As described above, the binary optical correlator of the present invention utilizes a light addressed binary spatial light modulator for converting the Fourier code hologram into the binarized intensity distribution hologram. The binary spatial light modulator is preferably comprised of a photoconductive layer, an optical reflection layer, a pair of liquid crystal alignment layers, a ferroelectric liquid crystal layer having a bistable memory characteristic between its reflectivity and an applied voltage, means for applying the voltage, and a pair of transparent substrates so as to constitute a light addressed liquid crystal light valve. By means of such a construction, fast pattern recognition can be carried out with a high S/N ratio, thereby realizing fast recognition and discrimination of image information.

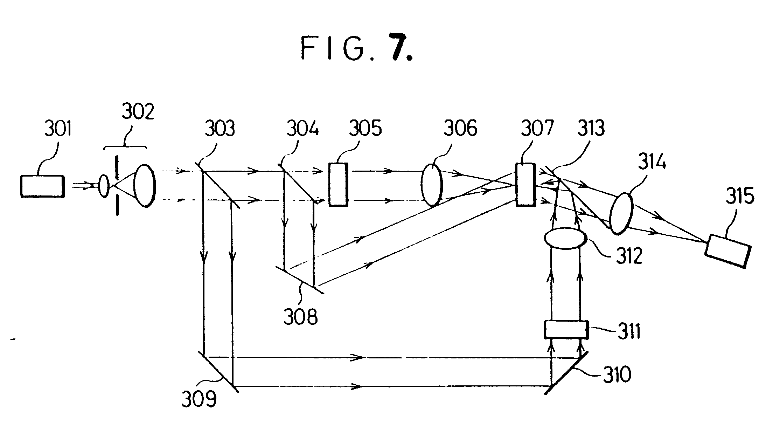

As shown in Figure 7, a laser source 301, a beam expander 302, a first beam splitter 303, a second beam splitter 304 and a code plate 305 together constitute means for converting at least one code or reference image including a given object or matching image into a corresponding coherent code image. The laser source 301, the beam expander 302, the first beam splitter 303, a second mirror 309, a third mirror 310 and an input plate 311 collectively constitute means for converting an input or signal image into a corresponding coherent input image. A first Fourier transform lens 306 and a second Fourier transform lens 312 placed separately from each other constitute means for Fourier transforming the coherent code image and the coherent input image independently of each other into a corresponding Fourier code image and a Fourier input image.

The second beam splitter 304 and a first mirror 308 constitute means for enabling coherent light of spherical wave or plane wave to interfere with the Fourier code image to form a Fourier code hologram. A light addressed binary spatial light modulator or light valve 307 constitutes means for converting and binarizing the Fourier code hologram into a binarized intensity distribution hologram and for recording or displaying the same. The light valve 307 is comprised of a hydrogenated amorphous silicon photoconductive layer, a reflection layer having a given transmission rate, a pair of liquid crystal alignment layers, a ferroelectric liquid crystal layer having a bistable memory characteristic between its reflectivity and applied voltage, means for applying the voltage, and a pair of transparent substrates. The second Fourier transform lens 312 and a polarizing beam splitter 313 constitute means for reading the binarized intensity distribution hologram recorded on the binary spatial light modulator 307 by using the Fourier input image. A third Fourier transform lens 314 and a photodetector 315 constitute means for Fourier transforming the read intensity distribution hologram into a correlation image and for converting the correlation image into a corresponding electrical output signal.

The laser source 301 emits coherent light which is expanded by the beam expander 302 and then divided into two beams by the first beam splitter 303. One of the two beams from the first beam splitter 303 is again divided by the second beam splitter 304 into two beams. One of the two beams from the second beam splitter 304 illuminates a code image on the code plate 305 to form a corresponding coherent code image. Thereafter, the coherent code image is Fourier transformed by the first Fourier transform lens 306, and thereafter irradiates a writing face of the light addressed binary spatial light modulator 307 to thereby form a Fourier code image. On the other hand, the other beam reflected by the second beam splitter 304 is again reflected by the first mirror 308 to thereafter irradiate the writing face of the binary spatial light modulator 307 in the form of a reference beam to interfere with the Fourier code image so as to form interference fringes. The interference fringes are binarized by a given threshold level and are then recorded on the binary spatial light modulator 307 in the form of a binarized Fourier code hologram. Further, the other beam reflected by the first beam splitter 303 is sequentially reflected by the second mirror 309 and the third mirror 310 to convert an input image on the input plate 311 into a corresponding coherent input image. The coherent input image is Fourier transformed by the second Fourier transform lens 312 and then irradiates a reading face of the modulator 307 through the polarizing beam splitter 313 to form the Fourier input image. Consequently, the binarized Fourier code hologram is read from the light addressed spatial light modulator 307. At this time, the Fourier input image irradiates the Fourier code hologram to make its axis coincide with that of the Fourier code hologram. The read image is passed through the polarizing beam splitter 313 and then Fourier transformed by the third Fourier transform lens 314 to form the correlation image which contains a correlation function and a convolution function between the code image and the input image. The intensity of the correlation function is detected by the photodetector 315.

In such a construction, the code plate 305 is placed in the front focal plane of the first Fourier transform lens 306. The light addressed binary spatial light modulator 307 is placed in the back focal plane of the first Fourier transform lens 306, in the back focal plane of the second Fourier transform lens 312, and in the front focal plane of the third Fourier transform lens 314. The input plate 311 is placed in the front focal plane of the second Fourier transform lens 312. The photodetector 315 is placed in the back focal plane of the third Fourier transform lens 314.

The input of the code and input images can be carried out by forming an image on a photographic dry plate, or by utilizing an electrically addressed spatial light modulator such as a liquid crystal television, magneto-optic modulator composed of yttrium iron garnet or gadolinium iron garnet, and an electro-optic modulator composed of PLZT or LiNo₃, or by projecting an article image directly onto the light addressed spatial light modulator to record thereon an input image.

The input image is recognized according to the level or height of the correlation peak which has the maximum intensity in the correlation image. Namely, the greater the level of the correlation peak becomes, the more the input image resembles the code image.

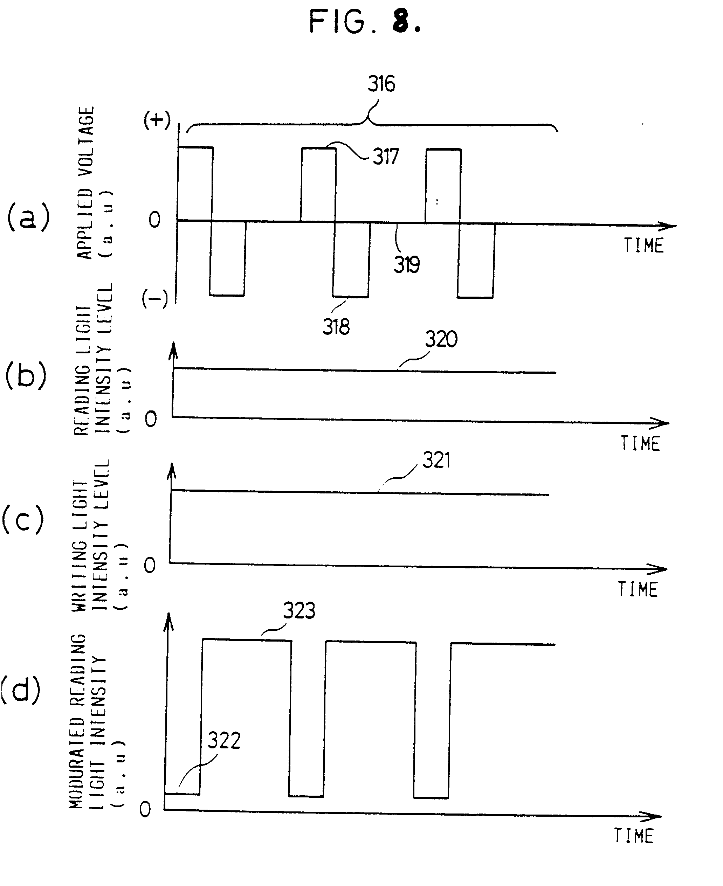

Figure 8 shows the optical response characteristics of a light addressed ferroelectric liquid crystal light valve which is driven according to the present invention in the holographic applications. When a reading light 320 irradiates a reading face of the light addressed ferroelectric liquid crystal light valve, the incident reading light partially reaches the hydrogenated amorphous silicon photoconductive layer through a dielectric mirror in the light valve and is absorbed in the surface region of the photoconductive layer at a depth of about 1µm because the dielectric mirror has an optical transmittance sufficient to enable the incident reading light to act on the photoconductive layer. The absorption induces pairs of electrons and holes such that the electrons move to a positive electrode and the holes move to a negative electrode. Since generally the mobility of electrons is several times to several ten times as great as that of the holes in the intrinsic or undoped hydrogenated amorphous silicon, the electrons are dominant in the electrical conductance.

Consequently, in the state where an erasing light in the form of the reading light effects irradiation, when a transparent electrode formed between the substrate and the hydrogenated amorphous silicon photoconductive layer is held at a positive voltage 317, the induced electrons are drawn to the positive voltage side across the photoconductive layer such that its impedance is abruptly reduced so as to reverse the ferroelectric liquid crystal molecules to thereby switch to a dark or erased state. On the other hand, if that transparent electrode were held at a negative voltage 318, the movable carrier would be holes, and the holes could not be effectively moved due to their low mobility, so that the photoconductive layer substantially never reduces its impedance. Consequently, the ferroelectric liquid crystal molecules would not switch to the opposite stable state, and therefore the erasing cannot be effected.

When a writing light 321 irradiates a writing face of the light valve which is opposite to the reading face while that electrode is held at the negative voltage 318, pairs of electrons and holes are induced in a surface region of the photoconductive layer at the writing side such that electron carriers are moved toward the liquid crystal layer across the photoconductive layer so as to locally reduce impedance thereof at a portion selectively irradiated with the writing light. Consequently, a sufficient voltage is applied to the liquid crystal molecules to switch to a bright or writing state 323 opposite to a dark or erasing state 322, thereby writing an image.

When the hydrogenated amorphous silicon photoconductive layer is held at a zero voltage 319, carriers are not moved, so that the written image in the form of a binarized Fourier hologram is memorized and can be read out by the irradiation of the reading light 320. In the zero voltage period, the contrast of the recorded Fourier hologram cannot be degraded even during fast response at the order of µsec. When the reading light 320 has sufficiently strong irradiation intensity and the dielectric mirror has sufficiently great reflectivity, such zero voltage duration 319 can be eliminated.

Consequently, according to the driving method described above, when the hydrogenated amorphous silicon photoconductive layer is held at the positive voltage, the image recorded on the light valve can be erased by the irradiation of erasing light from the reading side so as to reset or intialize the light valve. On the other hand, when the photoconductive layer is held at the negative voltage, a holographic image can be written in the light valve by the irradiation of writing light from the writing side.

Figure 5 shows an example of code and input images used for the binary optical correlator in Figure 7. Figure 6 shows a correlation image containing a correlation peak when using the code and input images shown in Figure 5. As shown in Figure 6, the correlation image contains a central zero-order image which is a mirror image of the input or code image,and a pair of peaks comprising a correlation peak and a convolution peak between the input and code images at the opposite sides of the zero-order image. The correlation peak and the convolution peak are aligned along a line perpendicular to the wave number vector of the Fourier hologram. The distance from the zero-order image increases when the wave number of the Fourier hologram increases.

The following description is provided concerning variation of the correlation peak intensity in the case of changing amplitude, pulse width or frequency of the driving pulse voltage applied to the light addressed ferroelectric liquid crystal light valve 307, processing the input signal and code signal shown in Figure 5.

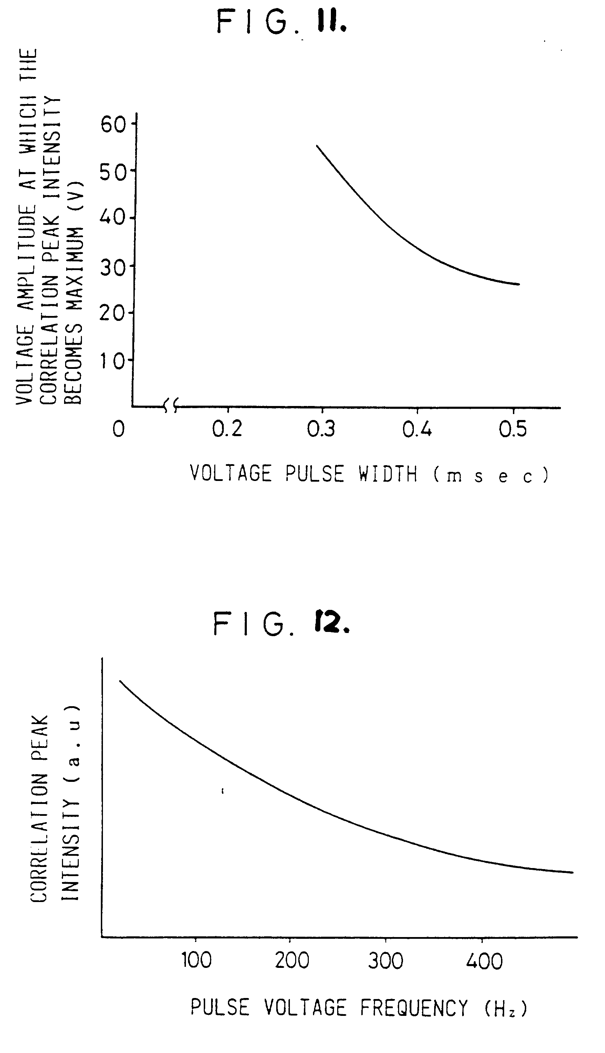

Namely, Figure 11 shows the relationship between the voltage pulse width and the voltage amplitude at which the correlation peak intensity has the maximum value when the driving method of the present invention is applied to the binary optical correlator. As seen from this figure, even if the voltage pulse width is set quite narrow at 0.3msec, the amplitude can be effectively adjusted to maximize the correlation peak intensity, thereby to achieve quite fast pattern recognition.

Figure 12 shows the relationship between the frequency of the pulse voltage and the correlation peak intensity when the driving method of the present invention is applied to the binary optical correlator. As seen from this figure, according to the driving method of the present invention the binary optical correlator can recognize the pattern in response to high frequency of the pulse voltage, i.e. high frequency of the rewriting operation greater than 400Hz. In practice, as described before, a point where the correlation peak appears can be determined according to the relative position between the code and input images. It is confirmed that the correlation peak can be obtained at a frame rate more than 30 - 400Hz.

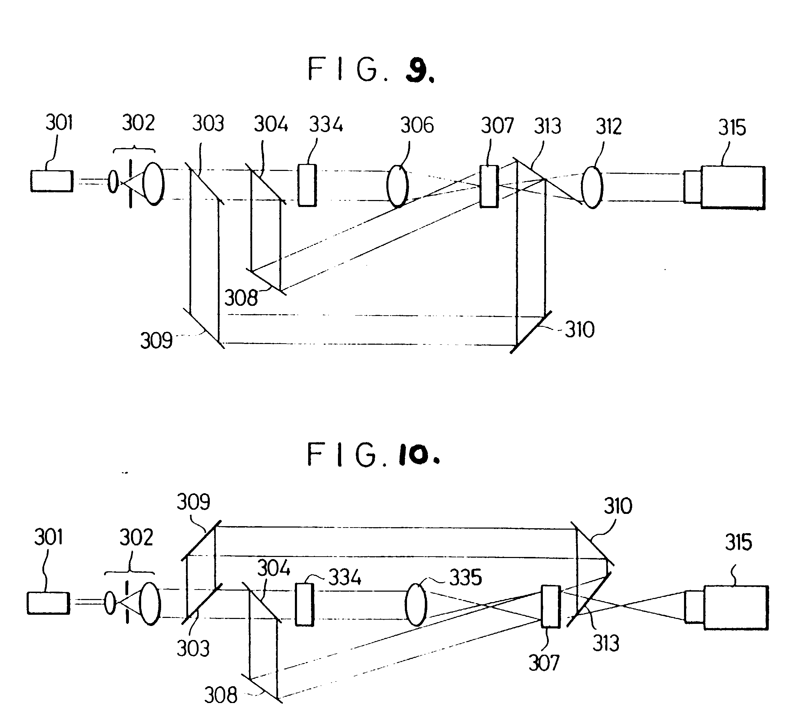

Figure 9 is a schematic diagram showing the holography apparatus of the Fourier transform type driven according to the driving method of the present invention. As shown in Figure 9, a laser source 301, a beam expander 302, a first beam splitter 303, a second beam splitter 304 and a liquid crystal television 334 constitute means for converting at least one input image into a coherent input image. A first Fourier transform lens 306 constitutes means for converting the coherent input image into a Fourier input image. A second beam splitter 304 and a first mirror 308 constitute means for enabling a coherent reference light of spherical or plane wave to interfere with the Fourier input image to form Fourier code hologram. A light addressed ferroelectric liquid crystal light valve 307 constitutes means for binarizing the Fourier code hologram and recording the results in the form of a binarized intensity hologram. The light valve 307 is composed of a hydrogenated amorphous silicon photoconductive layer, a reflection layer having a given transmittance, a liquid crystal alignment layer, a pair of ferroelectric liquid crystal layers having a bistable memory characteristic between its reflectivity and an applied voltage, means for applying the voltage, and a pair of transparent substrates. The first beam splitter 303, a third mirror 310 and a polarizing beam splitter 313 constitute means for reading the binarized intensity hologram recorded on the light valve 307 by using a coherent reading light of spherical or plane wave. A second Fourier transform lens 312 and a photodetector 315 constitute means for Fourier transforming the read binarized intensity hologram into a reconstructive or output image and for converting this image into a corresponding electric output signal.

The structure of the embodiment of Figure 9 differs from a known binary optical correlator in the following aspects. Namely, the input image is provided through the liquid crystal television 334. The input image recorded on the light valve 307 is read or reconstructed by coherent reading light of spherical or plane wave in the opposite direction to the coherent reference light of spherical or plane wave which forms the holographic interference fringes of the input image. Such a read Fourier input hologram is again Fourier transformed by the second Fourier transform lens 312 on a photodetection face of the photodetector 315 to reconstruct the input image. In such an arrangement, the reading face of the light valve 307 is placed in a front focal plane of the second Fourier transform lens 312, and the photodetection face of the photodetector is positioned in a back focal plane of the lens 312.

Similarly, as shown in Figure 11, the apparatus of Figure 9 has a specific relatonship between the voltage pulse width and the voltage amplitude at which the holographic reconstruction efficiency of the input image has the maximum value when the driving method of the present invention is applied to the Fourier transform type holography apparatus. Namely, even if the voltage pulse width is set quite narrow at 0.3msec, the amplitude can be effectively adjusted to maximize the holographic reconstruction efficiency, thereby to achieve quite fast holographic reconstruction of image.

Further, the embodiment in Figure 9 has a relationship, similar to that shown in Figure 12, between the frequency of the pulse voltage and the holographic reconstruction efficiency of the input image when the driving method of the prevent invention is applied to the Fourier transform type holography apparatus. According to the driving method of the present invention the image can be reconstructed in response to high frequency of the pulse voltage, i.e. a high frequency of rewriting operation greater than 400Hz. In practice, by moving the input image, it has been confirmed that the reconstructed image can move at a frame rate from more than 30 to 400Hz.

Further, since spatial frequency of the Fourier hologram of the input image to be recorded can be controlled by adjusting the voltage amplitude or voltage pulse width or pulse voltage frequency, various image processing, such as edge line emphasis or image extraction of moving object or fading of image, can be carried out at a fast rate.

Figure 10 is a schematic diagram showing the holography apparatus driven according to the driving method of the present invention. As shown in Figure 10, a laser source 301, a beam expander 302, a first beam splitter 303, a second beam splitter 304 and a liquid crystal television 334 constitute means for converting at least one input image into a coherent input image. A second beam splitter 304, a first mirror 308 and an imaging lens 335 constitute means for enabling coherent reference light of spherical or plane wave to interfere with the coherent input image to form holographic interference fringes. A light addressed ferroelectric liquid crystal light valve 307 constitutes means for binarizing the holographic interference fringes and recording the results in the form of a binarized intensity hologram. The light valve 307 is composed of a hydrogenated amorphous silicon photoconductive layer, a reflection layer having a given transmittance, a pair of liquid crystal alignment layers, a ferroelectric liquid crystal layer having a bistable memory characteristic between its reflectivity and an applied voltage, means for applying the voltage, and a pair of transparent substrates. The first beam splitter 303, a second mirror 309, a third mirror 310 and a polarization beam splitter 313 constitute means for reading the binarized intensity hologram recorded on the light valve 307 by using coherent reading light of spherical or plane wave. A photodetector 315 constitutes means for converting the read binarized intensity hologram into a corresponding electric output signal.

The embodiment of Figure 10 differs from the holographic apparatus of the Fourier transform type shown in Figure 9 in that an object hologram of the input image is recorded on the light valve 307 instead of recording a Fourier hologram of the input image on the light valve 307 so that the imaging lens 335 is utilized to form the input image directly on the writing face of the light valve 307, and in that the reconstruction of the input image from the object hologram is directly detected by the photodetector 315.

The apparatus of Figure 10 has a relationship similar to that shown in Figure 11 between the voltage pulse width and the voltage amplitude at which the holographic reconstruction efficiency of input image has the maximum value when the driving method of the present invention is applied to the holographic apparatus. Namely, even if the voltage pulse width is set quite narrow at 0.3msec, the amplitude can be effectively adjusted to maximise the reconstruction efficiency, to achieve quite fast holographic reconstruction of an input image.

Further, the embodiment in Figure 10 shows a relationship similar to that shown in Figure 12 between the frequency of the pulse voltage and the holographic reconstruction efficiency of the input image when the driving method of the present invention is applied to the holographic apparatus. According to the driving method of the present invention, the input image can be reconstructed in response to high frequency of the pulse voltage, i.e. a high frequency of rewriting operation grater than 400Hz. By moving the input image, it has been confirmed that the reconstructed input image can move at a frame rate from more than 30 to 400Hz.

Figure 13 is a sectional view showing the construction of a binary liquid crystal light valve or recorder using a ferroelectric liquid crystal. The light valve has a pair of transparent substrates 326a and 326b made of glass or plastics for sandwiching liquid crystal material, the substrates 326a and 326b having transparent electrodes 327a and 327b, respectively, on their inner faces and having liquid crystal alignment layers or films 328a and 328b, respectively, formed by oblique evaporation of silicon monoxide at an incident angle in the range from 75° to 85° with respect to the normal of the transparent substrates 326a, 326b. The transparent substrates 326a and 326b are disposed opposite to each other at a given distance by means of a spacer 333 to sandwich therebetween a ferroelectric liquid crystal layer 329 which is in contact with the alignment layers 328a and 329b. Further, the transparent elecrode 327a is positioned in order sequentially with a photoconductive layer 330 and a dielectric mirror 331 between the electrode 327a and the alignment film 328a to write optically. Anti-reflection coatings 332a and 332b are formed with the transparent substrates 326a and 326b, respectively on the outer faces of the cell. The optical transmission of the dielectric mirror 331 is set such that the light which reaches the hydrogenated amorphous silicon photoconductive layer 330 through the dielectric mirror 331 has an intensity from several tens µ W/cm² to one hundred times several tens µ W/cm².

The known apparatus would have the problem that a hologram cannot be recorded on a hologram recording medium when the hologram interference fringes flicker or vibrate due to air fluctuation or vibration of the system. In the embodiments given according to the method of the present invention such a problem can be effectively avoided because writing, erasing and reading of the hologram can be undertaken quite fast.

The driving pulse voltage waveform shown in Figure 8 may be advantageously superposed with a DC bias component. In the embodiments of the present invention the optical system for forming a hologram can be replaced by a Mach-Zehnder or a Michelson interferometer, to which the driving method of the present invention can be applied effectively. Further, the driving method of the present invention can be used for a joint transform correlator in which reference and input images are joint Fourier transformed to form Fourier hologram interference fringes, which are again Fourier transformed to produce a correlation image.

As described above, according to the driving method of the present invention for holographic applications, the holograph correlator and display can be driven quite fast above the video rate, and their output characteristics can be adjusted easily, thereby achieving various advantages in real-time pattern recognition, image processing and holographic display etc.

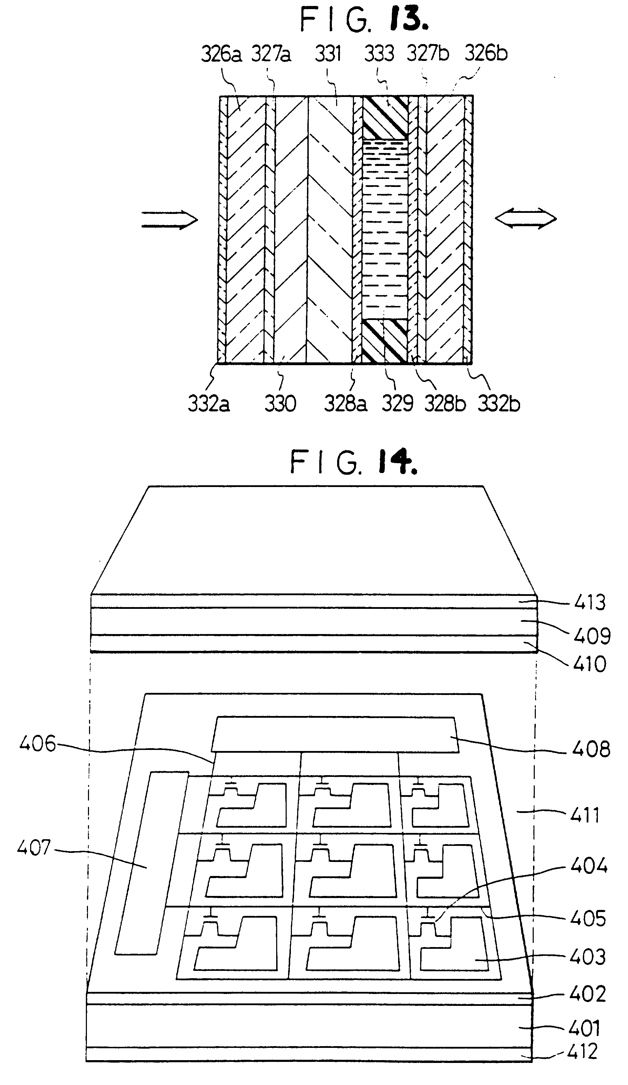

Figure 14 shows another type of electrically addressed liquid crystal light valve. The light valve in Figure 14 can also be utilized for a recording light valve, primary image display and so on in the apparatus of the present invention. The light valve is comprised of a substrate 401 composed, for example, of a quartz glass plate. A silicon single crystal film 402 is formed on the substrate 401 in a SOI (silicon on insulator) structure. A plurality of picture elements are formed in the silicon single crystal film 402 in a matrix array. Each picture element or pixel is comprised of a picture electrode 403 and a corresponding switching element 404 in the form of a field effect insulating gate type transistor. The transistor has a source electrode connected to the corresponding picture electrode, a drain electrode connected to a signal line 406. and a gate electrode connected to a scanning line 405. Each scanning line 405 is connected to a scanning circuit 407 so as to line-scan each row of the switching elements 404. Each signal line 406 is connected to a signal circuit 408 so as to drive the scanned switching elements 404 according to an image signal to select a corresponding picture element. The switching elements 404, the scanning circuit 407 and the driving circuit 408 can be concurrently formed on the silicon single crystal film 402 by LSI technology to thereby fabricate a µm-order of picture elements. An upper substrate 409 is disposed above the lower substrate 401 in spaced relation therefrom, and is formed with a counter electrode 410 on its inner face. A liquid crystal layer 411 of TN type or ferroelectric type is sandwiched between the lower and upper substrates 401 and 409. The liquid crystal layer 411 is locally activated between the counter electrode 410 and a selected picture element to switch the incident light through a pair of polarizers 412 and 413.

In the embodiment of Figure 14, the silicon single crystal film 402 is advantageously formed by the bonding of a silicon single crystal wafer and a quartz glass plate and by lapping of the wafer to enable application of LSI fabrication technology to the substrate.

## Claims

1. An optical correlation apparatus comprising:
means (201-205, 209, 211) for converting at least one code image and at least one input image into a corresponding coherent code image and coherent input image;
means (206, 212) for Fourier transforming the coherent code image and the coherent input image into a Fourier code image and a Fourier input image independently of each other;
means (204, 208) for enabling coherent reference light of spherical wave or plane wave to interfere with the light beams modulated with the code image to form a Fourier input code hologram;
means (207) for converting the Fourier code hologram into a binarized intensity distribution hologram image and for recording or displaying the same;
means (212, 213) for reading the binarized intensity distribution hologram by using light beams modulated with the Fourier input image; and
means (214, 215) for Fourier transforming the read binarized intensity hologram into a correlation image and for converting the correlation image into a corresponding output signal, characterised in that the means for converting the Fourier code hologram is a bistable spatial light modulator (207) comprising a light addressed liquid crystal light valve having a hydrogenated amorphous silicon photoconductive layer (330), an optical reflection layer (331), a pair of liquid crystal alignment layers (328a, 328b), a ferroelectric liquid crystal layer (329) having a bistable memory characteristic of its reflectivity in response to an applied voltage, voltage application means for applying the voltage, and a pair of transparent substrates (326a, 326b).

2. An optical correlation apparatus as claimed in claim 1, characterised in that the apparatus comprises first converting means (201-205, 216) for converting at least one code or reference image into a corresponding coherent code image; and second converting means (201-203, 209, 217, 210) for converting an input or signal image into a corresponding coherent input image.

3. An optical correlation apparatus as claimed in claim 1 or 2, characterised in that the apparatus comprises means for reading the binarized intensity distribution hologram recorded on the light valve by using a reading light from the Fourier input image.

4. A method of driving optical correlation apparatus as claimed in claim 3, characterised in that while continuously irradiating the light addressed ferroelectric liquid crystal light valve by writing light which forms Fourier holographic fringes thereon and by the reading light which forms the Fourier input image, the voltage application means is operated to continuously apply to the light addressed ferroelectric liquid crystal light valve a pulse voltage such that voltage polarity relative to the hydrogenated amorphous silicon photoconductive layer sequentially and cyclicly changes positive, negative and zero, erasing of the image is carried out during the time that the positive voltage is applied, writing of the image is carried out during the time that the negative voltage is applied, reading of the image is carried out during the time that the negative voltage or zero voltage is applied, and the pulse voltage is controlled to adjust its amplitude, frequency and pulse width during the periods in which the positive, negative and zero voltages are applied so as to regulate the intensity of the correlation image.

## Patentansprüche

1. Optische Korrelationsvorrichtung, umfassend:
- Mittel (201 - 205, 209, 211) zum Umwandeln mindestens eines Codebilds und mindestens eines Eingabebilds in ein entsprechendes kohärentes Codebild und ein entsprechendes kohärentes Eingabebild,
- Mittel (206, 212) zur voneinander unabhängigen Fourier-Transformation des kohärenten Codebilds und des kohärenten Eingabebilds in ein Fourier-Codebild und ein Fourier-Eingabebild,
- Mittel (204, 208), um eine Interferenz von kohärentem Referenzlicht von Kugelwellen oder ebenen Wellen mit den mit dem Codebild modulierten Lichtstrahlen zur Bildung eines Fourier-Eingabecodehologramms zu ermöglichen,
- Mittel (207) zum Umwandeln des Fourier-Codehologramms in ein binärisiertes Intensitätsverteilungshologrammbild und zum Aufzeichnen oder Anzeigen desselben,
- Mittel (212, 213) zum Lesen des binärisierten Intensitätsverteilungshologramms unter Verwendung von mit dem Fourier-Eingabebild modulierten Lichtstrahlen und
- Mittel (214, 215) zur Fourier-Transformation des gelesenen binärisierten Intensitätshologramms in ein Korrelationsbild und zum Umwandeln des Korrelationsbilds in ein entsprechendes Ausgabesignal,
**dadurch gekennzeichnet**, daß die Mittel zum Umwandeln des Fourier-Codehologramms ein bistabiler räumlicher Lichtmodulator (207) sind, welcher ein lichtadressiertes Flüssigkristallichtventil mit einer photoleitenden Schicht (330) aus hydriertem amorphen Silizium, einer optischen Reflexionsschicht (331), einem Paar von Flüssigkristallausrichtschichten (328a, 328b), einer ferroelektrischen Flüssigkristallschicht (329) mit einer bistabilen Speichercharakteristik ihres Reflexionsvermögens in Antwort auf eine angelegte Spannung, Spannungsanlegemitteln zum Anlegen der Spannung und einem Paar von transparenten Substraten (326a, 326b) umfaßt.

2. Optische Korrelationsvorrichtung nach Anspruch 1,
dadurch gekennzeichnet, daß die Vorrichtung erste Umwandlungsmittel (201 - 205, 216) zum Umwandeln mindestens eines Code- oder Referenzbilds in ein entsprechendes kohärentes Codebild sowie zweite Umwandlungsmittel (201 - 203, 209, 217, 210) zum Umwandeln eines Eingabe- oder Signalbilds in ein entsprechendes kohärentes Eingabebild umfaßt.

3. Optische Korrelationsvorrichtung nach Anspruch 1 oder 2,
dadurch gekennzeichnet, daß die Vorrichtung Mittel zum Lesen des auf dem Lichtventil aufgezeichneten binärisierten Intensitätsverteilungshologramms unter Verwendung eines Leselichts von dem Fourier-Eingabebild umfaßt.

4. Verfahren zur Ansteuerung der optischen Korrelationsvorrichtung nach Anspruch 3,
**dadurch gekennzeichnet**, daß während kontinuierlichem Bestrahlen des lichtadressierten ferroelektrischen Flüssigkristallichtventils mit Schreiblicht, welches Fourier-Holographiestreifen darauf bildet, und mit Leselicht, welches das Fourier-Eingabebild bildet, die Spannungsanlegemittel so betrieben werden, daß sie an das lichtadressierte ferroelektrische Flüssigkristallichtventil kontinuierlich eine Pulsspannung anlegen, derart, daß die Spannungspolarität bezogen auf die photoleitende Schicht aus hydriertem amorphen Silizium nacheinander und zyklisch von positiv auf negativ und null wechselt, wobei eine Löschung des Bilds während der Zeit, in der die positive Spannung angelegt ist, durchgeführt wird, ein Schreiben des Bilds während der Zeit, in der die negative Spannung angelegt ist, durchgeführt wird und ein Lesen des Bilds während der Zeit, in der die negative Spannung oder die Nullspannung angelegt ist, durchgeführt wird, und daß die Pulsspannung gesteuert wird, um ihre Amplitude, Frequenz und Pulsbreite während der Phasen, in denen die positive, die negative und die Nullspannung angelegt wird, zu justieren, um die Intensität des Korrelationsbilds zu regulieren.

## Revendications

1. Dispositif de corrélation optique comprenant :
des moyens (201-205, 209, 211) pour convertir au moins une image de code et au moins une image d'entrée en une image de code cohérente et une image d'entrée cohérente correspondantes ;
des moyens (206, 212) pour effectuer une transformation de Fourier de l'image de code cohérente et de l'image d'entrée cohérente en une image de code de Fourier et une image d'entrée de Fourier indépendantes l'une de l'autre ;
des moyens (204, 208) pour produire l'interférence de la lumière de référence cohérente d'onde sphérique ou d'onde plane avec les faisceaux de lumière modulés avec l'image de code pour former un hologramme de code d'entrée de Fourier ;
des moyens (207) pour convertir l'hologramme de code de Fourier en une image d'hologramme de répartition d'intensité binaire et pour enregistrer ou afficher celle-ci ;
des moyens (212, 213) pour lire l'hologramme de répartition d'intensité binaire en utilisant des faisceaux de lumière modulés avec l'image d'entrée de Fourier ; et
des moyens (214, 215) pour effectuer une transformation de Fourier de l'hologramme d'intensité binaire lu en une image de corrélation et pour convertir l'image de corrélation en un signal de sortie correspondant, caractérisé en ce que les moyens pour convertir l'hologramme de code de Fourier sont constitués par un modulateur de lumière spatiale bistable (207) comprenant une valve de lumière à cristaux liquides adressée par de la lumière ayant une couche photoconductrice de silicium amorphe hydrogéné (330), une couche de réflexion optique (331), une paire de couches d'alignement de cristaux liquides (328a, 328b), une couche de cristaux liquides ferroélectriques (329) ayant une mémoire bistable caractéristique de sa réflectivité en réponse à une tension appliquée, des moyens d'application de tension destinés à appliquer la tension et une paire de substrats transparents (326a, 326b).

2. Dispositif de corrélation optique selon la revendication 1, caractérisé en ce que le dispositif comprend des premiers moyens de conversion (201-205, 216) pour convertir au moins une image de code ou de référence en une image de code cohérente correspondante ; et des deuxièmes moyens de conversion (201-203, 209, 217, 210) pour convertir une image d'entrée ou de signal en une image d'entrée cohérente correspondante.

3. Dispositif de corrélation optique selon la revendication 1 ou 2, caractérisé en ce que le dispositif comprend des moyens pour lire l'hologramme de répartition d'intensité binaire enregistré sur la valve de lumière en utilisant une lumière de lecture de l'image d'entrée de Fourier.

4. Procédé de commande d'un dispositif de corrélation optique selon la revendication 3, caractérisé en ce que, pendant l'irradiation continue de la valve de lumière à cristaux liquides ferroélectriques adressée par de la lumière, par écriture de lumière formant des franges holographiques de Fourier sur celle-ci et par la lecture de lumière formant l'image d'entrée de Fourier, les moyens d'application de tension fonctionnent en appliquant en continu à la valve de lumière à cristaux liquides ferroélectriques adressée par de la lumière, une tension d'impulsions telle que la polarité de tension par rapport à la couche photoconductrice de silicium amorphe hydrogéné varie de façon séquentielle et cyclique en étant positive, négative et nulle, l'effacement de l'image est effectué pendant le temps où la tension positive est appliquée, l'écriture de l'image est effectuée pendant le temps où la tension négative est appliquée, la lecture de l'image est effectuée pendant le temps où la tension négative ou la tension nulle est appliquée et la tension d'impulsions est commandée de façon à régler ses amplitude, fréquence et largeur d'impulsions, pendant les périodes durant lesquelles les tensions positive, négative et nulle sont appliquées de façon à réguler l'intensité de l'image de corrélation.
